# EUROPEAN PATENT APPLICATION

(11) **EP 4 768 546 A2**
(43) Date of publication of application: **01.07.2026**
(21) Application number: 25220942.4
(22) Date of filing: 04.12.2025
(51) Int. Cl.: C09D 5/00, B29C 33/62, C08L 33/04, C09D 7/65, C09D 133/04

(54) **CROSS-LINKING ACRYLIC CONTAINING COMPOSITION IN VOC-FREE CARRIER AND USE THEREOF AS RELEASE AGENT**

(30) Priority: 06.12.2024 US 202463728970 P; 03.12.2025 US 202519407172
(71) Applicant: Illinois Tool Works Inc., Glenview IL 60025 (US)
(72) Inventor: CYBOTZ, Ryan P., Glenview, 60025 (US); MESZ, Alexandria R., Glenview, 60025 (US); CHAVEZ III, Ramiro A., Glenview, 60025 (US)
(74) Representative: HGF

(57) **Abstract**

A release composition for forming a coating on a surface. The composition includes a curable resin having a Formula (I) or Formula (II):

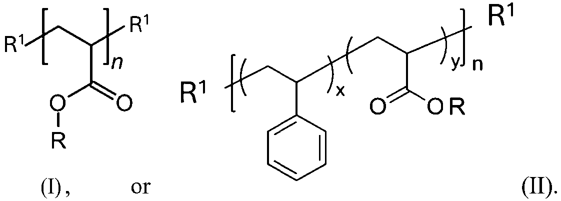

A carrier for the curable resin is also provided. A process of molding is also provided that includes the composition being applied to a mold surface. The composition is cured to form a mold release coating. Material is placed into contact with the mold release coating to form an article. The article is then removed from contact with the mold release coating.

## Description

### RELATED APPLICATIONS

This application is a non-provisional application that claims priority of US Provisional Application Serial Number 63/728,970 filed December 6, 2024; the contents of which are hereby incorporated in reference.

### FIELD OF THE INVENTION

The present invention in general relates to a dilute cross-linkable acrylic containing composition operative as a mold release agent with attractive handling and environmental impact properties.

### BACKGROUND OF THE INVENTION

The molding industry uses mold release agents for the removal of articles formed by various molding mediums utilizing numerous types of molds which are then constructed from a wide range of materials. These mold release agents can be divided into several categories and are subdivided by their longevity (number of cycles between reapplication of the mold release agent).

Sacrificial release agents are one type of commonly used release agents. These release agents are generally applied for every molding cycle. Sacrificial release agents exhibit little if any adhesion to the mold surface and release is provided by that failure with the release agent being removed from the mold surface and transferred or applied to the molded article. Sacrificial release agents further provide for excellent release ease of a molded article and accommodate to help keep mold surfaces clean, preventing fouling and tarnishing of the mold. However, the transfer of the sacrificial release agent to the molded article can deleteriously effect properties of the molded article such as adhesion between the article and a support apparatus (often referred to as an "insert") which allows for support and/or mounting of the molded article, paintability, acceptance of an adhesive, or other attribute as the molded article is "coated" with a release agent. Because sacrificial release agents are not adherent to the mold surface, they require reapplication to the mold surface for each and every molding cycle and thus exhibit "no longevity" and increased labor, materials use, and cycle time.

Semi-permanent release agents are another type of release agent which is typically used. Semi-permanent release agents are applied at a particular amount and at a particular frequency of intervals such that multiple molded articles are produced and demolded from a single application of the semi-permanent release agent. Semi-permanent release agents exhibit adhesion to the mold surface. Release ease is generally provided by the formation of an interface on the mold surface which is not compatible with the medium being molded against it. A well formulated semi-permanent release agent provides for excellent release ease, excellent longevity (number of molding cycle between re-application), excellent molded part appearance (often referred to as "Cosmetics"), a minimal amount of transfer so as to not interfere with bonding to an insert, application of a paint or an adhesive, or other "post molding application". However, transfer of the semi-permanent agent from the mold to the molded article can occur, causing similar deleterious effects as described for sacrificial release agents.

Finally, permanent release agents are another type of release agent typically used which is applied a single time and cured and remains on the mold surface until release efficacy is compromised whereupon they are removed and re-applied. Permanent release agents exhibit excellent adhesion to the mold surface. Release ease is provided by the adhesion of the permanent release agent to the mold, incompatibility with the medium being molded, and resistance to removal of the permanent release agent by the movement (action) of the mold medium against the agent (often referred to herein as "abrasion").

Release ease, coating longevity and tool longevity can be extended by the use of sacrificial, semi-permanent and a combination of the two over the top of the permanent release agent.

For example, permanent release agents can be used in conjunction with either a sacrificial or a semi-permanent release agent to aid in release, ease, longevity (time between application of the sacrificial or semi-permanent) and lifetime (time between initial application of the permanent release agent and removal thereof). There are myriads of possible combinations of material utilized to comprise sacrificial, semi-permanent and permanent release agents. Common release agents can be comprised of oils, fatty acids and their salts, "waxes", silicon-based polymers, fluoropolymers and co-polymers, glycols, and (with no intention of any limitation) combinations of any and all of the above.

The invention relates to the production of semi-permanent release agents that exhibit strong adhesion to mold surfaces, provide reliable release of the molding medium, and deliver superior cosmetic quality to molded articles. These release agents are designed to minimize transfer to the molded article or ensure that any transfer does not adversely affect subsequent post-molding operations. Furthermore, the compositions address environmental concerns by substantially reducing or eliminating issues associated with fluorochemical bioaccumulation.

Thus, there remains an unmet need to have a water-based release agent with attractive environmental properties that can be used in wide variety of mold release formulations across the manufacturing industry.

### SUMMARY OF THE INVENTION

A release composition for forming a coating on a surface is provided. The composition includes a curable resin having a Formula (I) or Formula (II): 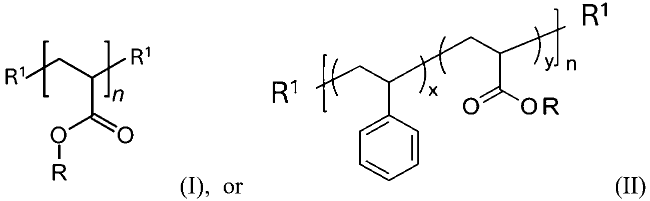 where n is an integer of ≥ 3; x and y are each positive integer values; R and R¹ in each occurrence are independently a reactive moiety of glycydoxy, C1-C8 alkoxy, C1-C8 alkoxy having a substituent, a halogen of chlorine, a C₁-C₈ chloroalkyl, a primary or secondary amine where each group is C₀-C₈, a blocked isocyanate, a ureido, a C2-C8 linear hydrocarbon having at least one ethylenic unsaturation and having a substituent, an acrylic, an allyl alcohol, hydroxyl group, methylacryloxy, acryloxy, mercapto, vinyl, styryl, chloropropyl, and/or sulfido; substituent for R and R¹ may include a sulfonyl; or a non-reactive moiety of an ethylenically saturated C0-C8 that is either linear or branched; with the proviso that at least three reactive moieties are present in Formula (I) or (II) for R and R¹ collectively and further that any hydrogen present in the R and R¹ groups is non-labile. A carrier for the curable resin is also provided.

A process of molding is also provided that includes the composition being applied to a mold surface. The composition is cured to form a mold release coating. Material is placed into contact with the mold release coating to form an article. The article is then removed from contact with the mold release coating.

### DETAILED DESCRIPTION OF THE PREFERRED EMBODIMENTS

The following detailed description is merely exemplary in nature and is in no way intended to limit the scope of the invention, its application, or uses, which may vary. The invention is described with relation to the non-limiting definitions and terminology included herein. These definitions and terminology are not designed to function as a limitation on the scope or practice of the invention but are presented for illustrative and descriptive purposes only.

The present invention contains an acrylic resin or acrylic-styrene resin with a minimum of three reactive moieties per molecule to provide for both mold adhesion and crosslink density. The composition is soluble in a VOC-free organic solvent or water, alone or with resort to an emulsifier. In certain embodiments, the composition functions as a semi-permanent mold release in a molding process. In some embodiments, the acrylic or acrylic-styrene resin is provided in the form of an emulsion or a microemulsion. These components are readily combined with release-effective additive materials such as silane or siloxane materials, waxes, polyalpha olefins, modified polyalpha olefins, non-functional acrylic resins or emulsions, lubricants to produce to release agent compositions. The acrylic or acrylic- styrene resins are also readily blended with additives such as a rheology modifiers, solvents, additional surfactants beyond those present in an emulsified form, defoamers, or a combination thereof. An inventive formulation is adapted to be atomized to deposit a layer onto a hot molding tool and allowing sufficient time for cure at elevated temperatures to form a coating thereon. A resulting coated molding tool is particularly suited to mold various elastomeric articles.

It is to be understood that in instances where a range of values are provided that the range is intended to encompass not only the end point values of the range but also intermediate values of the range as explicitly being included within the range and varying by the last significant figure of the range. By way of example, a recited range of from 1 to 4 is intended to include 1-2, 1-3, 2-4, 3-4, and 1-4.

An acrylic resin operative in an inventive composition has a formula (I) as follows: 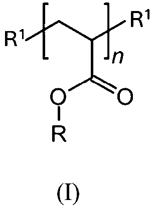 where n is an integer of ≥ 3. A reactive moiety for the purposes of the present invention include those moieties that react on the mold surface or bladder surface to form bonds to other polymers of Formula (I or II), the mold surface, or both. Reactive moieties R and R¹ operative herein can be the same or different, and each is independently, but not limited to, a glycidoxy, C1-C8 alkoxy, C₁- C8 alkoxy having a substituent, a halogen of fluorine or chlorine, a C1-C8 haloalkyl, a primary or secondary amine where each group is C₀-C₈, a blocked isocyanate, a ureido, a C2-C8 or greater linear hydrocarbon comprising at least one ethylenic unsaturation and having a substituent, an acrylic, an allyl alcohol, hydroxyl group, methylacryloxy, acryloxy, mercapto, vinyl, styryl, chlropropyl, and/or sulfido. A substituent for R and R¹ may include sulfonyl, or other suitable non- fluorinated substituents. In contrast, non-reactive moieties in a molecule of formula (I) illustratively include where R and R¹ can be the same or different and each independently is a saturated C₀-C₈ or greater alkyl, either linear or branched. Formula (I) is subject to the proviso that at least three reactive moieties are present in Formula (I) for R and R¹ collectively and further that any hydrogen present in the R groups is non-labile so as to preclude the outgassing of hydrogen. Without intending to be bound to a particular theory, the reactive moieties promote mold adhesion and crosslink density of a resulting coating.

An acrylic-stryene resin operative in an inventive composition has a formula (II) as follows: 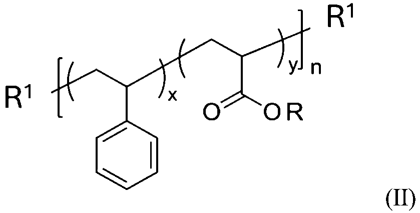 where variables n, R, and R¹ have the same meanings ascribed to each above with respect to formula (I), x and y are each positive integer values. It is appreciated that the resin (II) can be a block copolymer with regions comparatively rich in either styrenic or acrylic subunits, be an alternating copolymer, a random copolymer, or combinations thereof. Formula (II) is subject to the proviso that at least three reactive moieties are present in Formula (II) for R and R1 collectively and further that any hydrogen present in the R groups is non-labile so as to preclude the outgassing of hydrogen. Without intending to be bound to a particular theory, the reactive moieties promote mold adhesion and crosslink density of a resulting coating.

The resins of either formula (I) or (II) typically have a weight average molecular weight (Mw) of between 300 and 500,000 as measured per ASTM 4001. It is appreciated that factors in selecting Mw illustratively include composition viscosity, degree of cross-linking upon cure, emulsification characteristics, release ease, and longevity. In some inventive embodiments, the resins of either formula (I) or (II) are diluted so as to be present in a fully-formulated composition from 0.8 to 28.0 total weight percent.

In at least one embodiment of the present invention, the reactive polymer is telechelic and in still other embodiments does not contain reactive moieties at the terminal ends of the polymer (i.e. atelechic or pendent). In some embodiments of the present invention, the polymer of formula (I) or (II) has 4, 5, 6, and up to 20 or more reactive moieties with the appreciation that a molecular weight per reactive moieties value is readily varied with a lower molecular weight per reactive moiety typically associated with a harder coating having better mold surface bonding properties, as compared to a higher molecular weight per reactive moiety. In some embodiments of the present invention, the polymer of formula (I) or (II) has pendant reactive moieties. In still other inventive embodiments, the polymer of formula (I) or (II) has all of said reactive moieties being like moieties. Without intending to be bound to a particular theory of operation, it is believed that pendant reactive moieties bond to the surface of the mold and within the semi-permanent mold release layer.

As used herein, a C₀ moiety denotes the moiety absent a carbon chain; by way of example, a hydroxyl C₀ alkyl denotes a hydroxyl directly bonded to the remainder of the molecule.

The resins of formula (I), formula (II), or a combination of both are present in some inventive embodiments as either emulsions or microemulsions.

For the purposes of this invention, an emulsion is defined as being thermodynamically unstable and thus separating over time with a minority oil phase droplet size of between 100 nanometers and one micron.

For the purposes of this invention, a microemulsion is defined as being thermodynamically stable and thus not separating over time with a minority oil phase droplet size of less than 100 nanometers.

The formation of emulsions from the resins of formulas (I) and (II) are known to the art and illustratively include the materials and techniques detailed in F. Zhang et al. J. of Macromol. Sci., Part A, Vol. A41, No. 1, pp. 15-27, 2004; and F. Zhang et al. Polymer Intl. Vol. 53, No. 9, pp. 1353-1359, 2004. Similarly, the formation of microemulsions from the resins of formulas (I) and (II) are known to the art and illustratively include the materials and techniques detailed in M. Wang, et al. Proc. of 2020 11th China Academic Conf. on Printing and Packaging (pp. 599-606). It is appreciated that such emulsified resins are commercially available.

In some inventive embodiments, the composition includes silane- or siloxane-materials operative as conventional mold release agents. Silane- or siloxane-materials operative herein illustratively include those with a general formula (III): 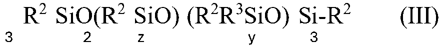 where R² in each occurrence is independently a hydroxyl group or a monovalent organic group, and each R³ in each occurrence is independently a monovalent organic group unreactive with aliphatically unsaturated organic groups and silicon-bonded hydrogen atoms in the composition, z is an integer value of 0 or greater, y is an integer value of 1 or greater with the proviso that x and y have may have values sufficient that the mold release agent has a viscosity of 50 to 1,500,000 cps at molding process temperatures. In some inventive embodiments, R² is only hydroxyl in terminal positions. Alternatively, R² in each occurrence is independently a C1-36 alkyl group; and R³ in each occurrence is independently an aromatic group such as phenyl, tolyl, or xylyl. Alternatively, each R² may be methyl and each R³ may be phenyl.

It is appreciated that α,ω-dihydroxy-functional polydiorganosiloxanes are also operative herein. These α,ω-dihydroxy-functional polydiorganosiloxanes have a general formula (IV): 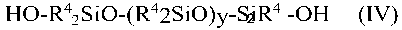 where R⁴ in each occurrence is independently an aromatic group as exemplified above as to R³, or a monovalent substituted or unsubstituted hydrocarbon group free of aromatics and free aliphatic unsaturation as exemplified above and subscript y is an integer with a value of 1 or more, as detailed above. It is appreciated that a silane- or siloxane-material may be a single type of molecule, such as a polydiorganosiloxane or a combination of two or more types of molecules that differ in at least one of the following properties: structure, viscosity, average molecular weight, siloxane units, and sequence. The viscosity of the silane- or siloxane-material typically ranges from 50 to 1,000 mPa·s at 25 °C. Exemplary formulations are those sold under the trade name DOWSIL-20^{®} (The Dow Chemical Company), trimethylsilyl terminated medium viscosity polydimethylsiloxane, such as those sold under the trade name DOWSIL-2-3387^{®} (The Dow Chemical Company), as well as those detailed in US20190002732A1. Silane- or siloxane- materials, are optional in an inventive composition, and are present in amounts ranging from 0 to 5 total weight of the fully formulated composition.

In some inventive embodiments, the silane- or siloxane-materials are emulsified to promote stable suspension in a water or VOC-free solvent system. Suitable silane or siloxane emulsifiers in the present invention are nonionic surfactants. Nonionic surfactants operative herein illustratively include polyoxyethylene type nonionic surfactant, a polyol type nonionic surfactant, an alkyl alcohol amide type nonionic surfactant, and a silicone type nonionic surfactant, or combinations of any of the aformenteioned. Specific exemplary nonionic surfactants operative herein illustratively include: polyoxyethylene nonylphenol ether ammonium sulfate, lauryl alcohol polyoxyethylene ether, lauryl alcohol polyoxyethylene ether, lauryl alcohol polyoxyethylene ether, lauryl alcohol polyoxyethylene ether, lauryl alcohol polyoxyethylene ether, C12-C16 mercapto alcohol polyoxyethylene ether, C12-C16 alkyl alcohol polyoxyethylene ether, tridecyl alcohol polyoxyethylene ether, tridecyl alcohol polyoxyethylene ether, tridecyl alcohol polyoxyethylene ether, cetyl alcohol polyoxyethylene ether, cetyl alcohol polyoxyethylene ether, cetyl alcohol polyethylene oxide ether, isocetyl alcohol polyoxyethylene ether, cetyl alcohol polyoxyethylene ether, octadecyl alcohol polyoxyethylene ether, hexadecanol polyoxyethylene ether, octadecyl alcohol polyoxyethylene ether, tallow alcohol polyoxyethylene ether, stearyl alcohol polyoxyethylene ether, oleyl alcohol polyoxyethylene ether, nonylphenol polyoxyethylene ether, nonylphenol polyoxyethylene ether, nonylphenol polyoxyethylene ether, nonylphenol polyoxyethylene ether, nonylphenol polyoxyethylene ether, nonylphenol polyoxyethylene ether, sulfhydryl phenol polyoxyethylene ether, nonylphenol polyoxyethylene ether, nonylphenol polyoxyethylene ether, cocoamine polyethylene oxide ether, ethylenediamine polyoxyethylene-polyoxypropylene-polyoxyethylene block polyether, dilaurate polyethylene glycol ether, polyethylene glycol dilaurate, polyethylene glycol stearate, stearic acid polyethylene glycol ester, polyoxyethylene glyceryl monostearate, polyethylene oxide sorbitan monooleate, polyoxyethylene sorbitol alcoholic anhydride trioleate, polyether modified polysiloxane, and combinations thereof. The number of subunits in a polymeric surfactant are known to the art as these are a class of commercially available chemical components. The emulsifier for silane- or siloxane-materials is typically from 0.2 to 25.0 weight percent of the silane- or siloxane-material.

The present invention is based on an aqueous, VOC-free carrier, or a VOC containing carrier in which other components are suspended or dissolved. The carrier typically is present from 85 to 99.9 total weight percent of the composition. Besides water, other VOC-free solvents suitable for usage in a carrier illustratively include acetone. IVOC carriers are conventional to the art. In some inventive embodiments, the organic solvent is miscible with water and present in a lesser quantity to function as a co-solvent to enhance storage stability of the composition.

In some inventive embodiments, an inventive composition includes one or more of: an antimicrobial agent, a catalyst, a rheology modifier, a wetting (or re-wetting agent), a flow agent a filler, a defoamer, a gas scavenger, a fluorescing agent. or combinations thereof.

An antimicrobial agent operative herein illustratively includes benzothiazolinone; 5-chloro-2-methyl-4-isothiazolin-3-one; 2-methy1-4-isothiazolin-3-one; a natural essential oil, such as wild oregano oil; 2-Bromo-2-nitro-1,3-propanediol; glutaraldehyde and combinations thereof. Typically loading of antimicrobials in an inventive composition range from 0 to 2 total weight percent. In still other inventive embodiments, when an antimicrobial is present, loadings of synthetic antimicrobials range from 0.05 to 0.8 total weight percent.

It is appreciated that an inventive composition in some applications functions a semi-permanent mold release. Semi-permanent in the context of the present invention is intended to define coatings applied to a mold surface which provides more than one release per application.

An inventive mold release must provide for both adherence of the release agent to the mold (via one or more adhesion mechanisms) and provide for non-adherence of the molding article to the mold release interface in order to function as a semi-permanent mold release agent.

Formulation requirements are varied and in general are based upon the mold composition, the "aggressive nature" of the molding medium (to solvate and/or abrade the mold release interface), the requirement (or lack thereof) for release ease and/or mechanical "slip", which is often dictated by the geometry of the molded article.

Typical and preferred compositions according to the present inventions are provided in Table 1.

| | | |
|---|---|---|
| Resin of formula (I) or (II) or ombination | 0.5-10 | 0.66-5 |
| Silane | 0-5 | 0.1-2 |
| Wax (emulsion/dispersion) | 0-5 | 0.1-2 |
| Miscible organic cosolvent of queous carrier system | 0-2.0 | 0-2.0 |
| Antimicrobial agent | 0-0.2 | 0.05-0.2 |
| Catalyst | 0-1 | 0.01-0.5 |
| Flow agent | 0-2 | 0.1-2 |
| Rheology modifier | 0-5 | 0.1-2 |
| Wetting agent | 0-5 | 0.1-2 |
| Filler | 0-40 | 0-20 |
| Defoamer | 0-5 | 0.1-2 |
| Gas scavenger | 0-5 | 0.1-2 |
| Fluorescing agent | 0-5 | 0.1-2 |
| Carrier | to 100% | to 100% |

An inventive composition is readily provided as a kit in the form of a bottle or aerosol canister. The bottle is optionally equipped with a pump- or spray-trigger. With the provision of an optional wipe to remove excess composition, along with instructions for doing so, an inventive kit is operational. The instructions can also provide details as to how the composition is re-applied after an applied film is worn. It is also appreciated that a pre-impregnated wipe is also provided with similar instructions for application to the substrate.

The present invention is further detailed with respect to the following non-limiting examples that are provided to further illustrate the preparation of specific inventive compositions and certain attributes associated with the resulting films on substrates.

### EXAMPLE 1

A 1.0% TNV, semi-permanent release agent is produced by stirring 1.93 parts of an acrylic emulsion into 98.07 parts of deionized water. 0.10 parts by weight of biocide is added under continued agitation as a preservative. The resulting composition is applied to the surface of a heat hardened, steel o-ring tool heated to 350F, 0.70 grams of a peroxide-cured, silicon elastomer are introduced into the o-ring portion of the mold and a piece of file folder is placed over the elastomer. This "assembly" is placed in a press with heated platens top and bottom such that the tool remains at 350°F. 2000 pounds of force are applied, and the silicon elastomer is cured for 3 minutes. The force to remove the silicon elastomer from the o-ring is measured repeatedly until the force of removal (release ease) surpasses 100 grams. The composition releases the silicon elastomer below this force for 10- rounds. The composition is thereby reapplied (or touched up) over itself on the hot mold. Another 10-rounds are released below the 100-gram threshold.

### EXAMPLE 2

A 1.0% TNV, semi-permanent release agent with additional flow properties is produced by stirring 1.5 parts of acrylic emulsion into 92 parts of deionized water. Then add 0.5 parts by weight of flow agent, 5 parts of wettability agent and 0.2 parts of biocide resulting composition is applied similarly as described in EXAMPLE 1. This formulation is to be used when higher flow rate of the elastomer may be required in molds with complex geometries.

### COMPARATIVE EXAMPLE A

A fluorinated composition, modified with a polydimethyl siloxane and free of an "acrylic emulsion" is applied to the same 350°F, heat hardened steel o-ring tool. The fluorinated release agent composition is applied to the surface of a heat hardened, steel o-ring tool heated to 350°F, 0.70 grams of a peroxide-cured, silicon elastomer are introduced into the o-ring portion of the mold and a piece of file folder is placed over the elastomer. This "assembly" is placed in press with heated platens top and bottom such that the tool remains at 350°F. 2000 pounds of force are applied, and the silicon elastomer is cured for 3 minutes. The force to remove the silicon elastomer from the o-ring is measured repeatedly until the force of removal (release ease) surpasses 100 grams. The composition releases the silicon elastomer below this force for only 4-rounds. The composition is thereby reapplied (or touched up) over itself on the hot mold. Another 4-rounds are released below the 100 gram threshold.

The formulation of Example 1, Example 2 and Comparative Example A are air atomized to deposit onto various hot molding tool and allowed to cure at elevated temperatures (>250°F). A molding tool coated in this way can then be used to mold various elastomeric materials. Example 1 had similar release for elastomers of silicon elastomer, P-EPDM, and bisphenol/amine/ peroxide cured fluoroelastomers with lower cost and a better environmental profile compared to Comparative Example A.

While at least one exemplary embodiment has been presented in the foregoing detailed description, it should be appreciated that a vast number of variations exist. It should also be appreciated that the exemplary embodiments are only examples, and are not intended to limit the scope, applicability, or configuration of the described embodiments in any way. Rather, the foregoing detailed description will provide those skilled in the art with a convenient road map for implementing the exemplary embodiment or exemplary embodiments.

Certain embodiments of the invention are described in the following clauses:
Clause 1. A release composition for forming a coating on a surface, the composition comprising:
   a curable resin having a Formula (I) or Formula (II): 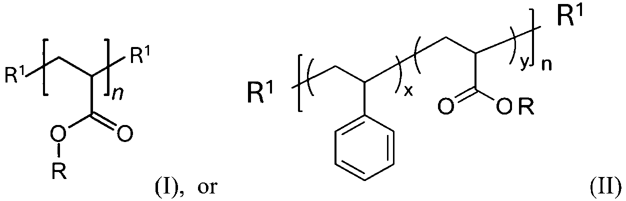 where n is an integer of ≥ 3; x and y are each positive integer values; R and R¹ in each occurrence are independently a reactive moiety of glycidoxy, C₁-C₈ alkoxy, C₁-C₈ alkoxy having a substituent, a halogen of chlorine, a C₁-C₈ chloroalkyl, a primary or secondary amine where each group is C₀-C₈, a blocked isocyanate, a ureido, a C₂-C₈ linear hydrocarbon having at least one ethylenic unsaturation and having a substituent, an acrylic, an allyl alcohol, hydroxyl group, methylacryloxy, acryloxy, mercapto, vinyl, styryl, chloropropyl, and/or sulfido; substituent for R and R¹ may include a sulfonyl; or a non-reactive moiety of an ethylenically saturated C₀-C₈ that is either linear or branched; with the proviso that at least three reactive moieties are present in Formula (I) or (II) for R and R¹ collectively and further that any hydrogen present in the R and R¹ groups is non-labile.; and
   a carrier for the curable resin.
Clause 2. The composition of clause 1 further comprising at least one surfactant suitable for producing an emulsion or microemulsion of said curable resin having a Formula (I) or Formula (II).
Clause 3. The composition of clause 1 further comprising a silane material or a siloxane material.
Clause 4. The composition of clause 1 further comprising at least one of an antimicrobial agent, a catalyst, a rheology modifier, a wetting (or re-wetting agent), a filler, a defoamer, a gas scavenger, a fluorescing agent. or any combinations thereof.
Clause 5. The composition of clause 1 wherein said curable resin having a Formula (I) or Formula (II) is present from 1 to 5 total weight percent of the composition.
Clause 6. The composition of clause 1 wherein said reactive moieties are all pendant.
Clause 7. The composition of clause 1 wherein each of said reactive moieties in Formula (I) or (II) is independently one of the glycidoxy, the C₁-C₈ alkoxy, the halogen, the amine, the isocyanate, the ureido, the ethylenically unsaturated group, the methylacryloxy, the acryloxy, the mercapto, the vinyl, the styryl, the C₁-C₈ halo alkyl, the acrylic, the allyl alcohol, the halogen, and the hydroxyl group.
Clause 8. The composition of clause 1 wherein all of said reactive moieties in Formula (I) or (II) are like moieties.
Clause 9. The composition of clause 1 further comprising a VOC-free cosolvent.
Clause 10. The composition of clause 1 wherein said solvent is only water.
Clause 11. The composition of clause 1 wherein said curable resin is only one of a Formula (I) or Formula (II).
Clause 12. A process of molding comprising:
   applying a composition of clause 1 to a mold surface;
   curing said composition to form a mold release coating; and
   placing of a material into contact with said mold release coating to form an article; and removing the article from contact with said mold release coating.
Clause 13. The process of clause 12 wherein the mold surface is a steel or aluminum surface.
Clause 14. The process of clause 12 further comprising performing more than one molding cycle without reapplying the composition of any one of clauses 1 to 11 to the mold surface.
Clause 15. The process of clause 14 further comprising repeat said injecting of said material and said removing the article.
Clause 16. The process of clause 14 wherein the mold surface is a bladder surface.
Clause 17. The process of clause 12 wherein the article is elastomeric.
Clause 18. A film formed by the evaporation of the carrier system from clause 1 onto a substrate, the substrate having a temperature of greater than 250°F.
Clause 19. A kit comprising:
   a composition according to clause 1 in a spray bottle or aerosol cannister; and
   instructions for the applying the composition to a substrate to form the film.

## Claims

1. A release composition for forming a coating on a surface, the composition comprising:
a curable resin having a Formula (I) or Formula (II): 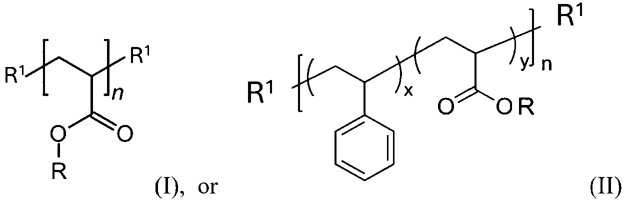 where n is an integer of ≥ 3; x and y are each positive integer values; R and R¹ in each occurrence are independently a reactive moiety of glycidoxy, C₁-C₈ alkoxy, C₁-C₈ alkoxy having a substituent, a halogen of chlorine, a C₁-C₈ chloroalkyl, a primary or secondary amine where each group is C₀-C₈, a blocked isocyanate, a ureido, a C₂-C₈ linear hydrocarbon having at least one ethylenic unsaturation and having a substituent, an acrylic, an allyl alcohol, hydroxyl group, methylacryloxy, acryloxy, mercapto, vinyl, styryl, chloropropyl, and/or sulfido; substituent for R and R¹ may include a sulfonyl; or a non-reactive moiety of an ethylenically saturated C₀-C₈ that is either linear or branched; with the proviso that at least three reactive moieties are present in Formula (I) or (II) for R and R¹ collectively and further that any hydrogen present in the R and R¹ groups is non-labile.; and
a carrier for the curable resin.

2. The composition of claim 1 further comprising at least one surfactant suitable for producing an emulsion or microemulsion of said curable resin having a Formula (I) or Formula (II).

3. The composition of claim 1 or claim 2 further comprising a silane material or a siloxane material.

4. The composition of any one of claims 1 to 3 further comprising at least one of an antimicrobial agent, a catalyst, a rheology modifier, a wetting (or re-wetting agent), a filler, a defoamer, a gas scavenger, a fluorescing agent. or any combinations thereof.

5. The composition of any one of claims 1 to 4 wherein said curable resin having a Formula (I) or Formula (II) is present from 1 to 5 total weight percent of the composition, and/or
wherein said reactive moieties are all pendant.

6. The composition of any one of claims 1 to 5 wherein each of said reactive moieties in Formula (I) or (II) is independently one of the glycidoxy, the C₁-C₈ alkoxy, the halogen, the amine, the isocyanate, the ureido, the ethylenically unsaturated group, the methylacryloxy, the acryloxy, the mercapto, the vinyl, the styryl, the C₁-C₈ halo alkyl, the acrylic, the allyl alcohol, the halogen, and the hydroxyl group.

7. The composition of any one of claims 1 to 6 wherein all of said reactive moieties in Formula (I) or (II) are like moieties, and/or wherein the composition further comprises a VOC-free cosolvent.

8. The composition of any one of claims 1 to 7 wherein said solvent is only water, and/or wherein said curable resin is only one of a Formula (I) or Formula (II).

9. A process of molding comprising:
applying a composition of any one of claims 1 to 8 to a mold surface;
curing said composition to form a mold release coating; and
placing of a material into contact with said mold release coating to form an article; and removing the article from contact with said mold release coating.

10. The process of claim 9 wherein the mold surface is a steel or aluminum surface.

11. The process of claim 9 or claim 10 further comprising performing more than one molding cycle without reapplying the composition of any one of claims 1 to 8 to the mold surface.

12. The process of claim 11 further comprising repeat said injecting of said material and said removing the article, and/or wherein the mold surface is a bladder surface.

13. The process of any one of claims 9 to 12 wherein the article is elastomeric.

14. A film formed by the evaporation of the carrier system from any one of claims 1 to 8 onto a substrate, the substrate having a temperature of greater than 250°F.

15. A kit comprising:
a composition according to any one of claims 1 to 8 in a spray bottle or aerosol cannister; and
instructions for the applying the composition to a substrate to form the film.
